# EUROPÄISCHE PATENTSCHRIFT

(11) **EP 2 959 336 B1**
(45) Veröffentlichungstag und Bekanntmachung des Hinweises auf die Patenterteilung: **12.10.2016**
(21) Anmeldenummer: 14711912.7
(22) Anmeldetag: 21.02.2014
(51) Int. Cl.: G02C 5/22

(54) **SCHARNIERGELENK FÜR EINE BRILLE**
HINGE JOINT FOR EYEGLASSES
ARTICULATION À CHARNIÈRE POUR DES LUNETTES

(30) Priorität: 22.02.2013 AT 501192013
(43) Veröffentlichungstag der Anmeldung: 30.12.2015
(73) Patentinhaber: Silhouette International Schmied AG, 4020 Linz (AT)
(72) Erfinder: SPINDELBALKER, Rupert, A-4048 Puchenau (AT)
(74) Vertreter: Patentanwaltskanzlei Hübscher
(86) Internationale Anmeldenummer: PCT/AT2014/050041
(87) Internationale Veröffentlichungsnummer: WO 2014/127394

(56) Entgegenhaltungen:
- WO-A1-00/22476
- WO-A1-2012/102093
- US-B1- 6 863 396
- US-B1- 7 300 150

## Beschreibung

### Technisches Gebiet

Die Erfindung bezieht sich auf ein Scharniergelenk für eine Brille mit einem zwischen zwei Schenkeln einer Gelenkgabel eingreifenden Scharnierlappen und einer auf einem Schwenkarm angeordneten Scharnierachse zwischen dem Scharnierlappen und der Gelenkgabel, wobei der Schwenkarm um eine zur Scharnierachse senkrechte Inklinationsachse verschwenkbar und in der jeweiligen Schwenkstellung über eine Rastverzahnung festhaltbar ist, die mit einer Gegenverzahnung des Schwenkarms zusammenwirkt.

### Stand der Technik

Zur Neigungsverstellung eines Brillenbügels gegenüber dem die Fassung für die Brillengläser bildenden Brillengestell ist es bekannt (EP 1 131 667 B1), den mittleren Scharnierlappen mit der angeformten Scharnierachse als Schwenkarm auszubilden, der in einer Aufnahmetasche des Brillengestells um eine zur Scharnierachse senkrechte Inklinationsachse verschwenkbar gelagert ist und in den einzelnen Neigungslagen durch eine Rastverzahnung festgehalten wird. Diese Rastverzahnung ist an den Seitenwänden der Aufnahmetasche vorgesehen und wirkt mit einer Gegenverzahnung am laschenartigen Schwenkarm zusammen. Durch ein Verschwenken des Scharnierlappens und damit der Scharnierachse um die Inklinationsachse kann somit die Neigung des Brillenbügels in Winkelschritten vorgenommen werden, die durch die Rastverzahnung vorgegeben sind. Durch die zusätzliche Schwenklagerung des mittleren Scharnierlappens des Scharniergelenks ergibt sich eine vergleichsweise aufwendige Konstruktion, die außerdem einen entsprechenden Platz beansprucht, was die Gestaltungsmöglichkeiten für die Brille einschränkt.

### Darstellung der Erfindung

Der Erfindung liegt somit die Aufgabe zugrunde, ein Scharniergelenk mit der Möglichkeit einer Verstellung des Neigungswinkels des Brillenbügels so auszugestalten, dass im Vergleich zu Scharniergelenken für Brillen ohne Inklinationsachse im Wesentlichen übereinstimmende Platzanforderungen bestehen und der zusätzliche Konstruktionsaufwand klein bleibt.

Ausgehend von einem Scharniergelenkt der eingangs geschilderten Art löst die Erfindung die gestellte Aufgabe dadurch, dass der Schwenkarm in einem den Scharnierlappen in Richtung der Scharnierachse durchsetzenden Langloch vorgesehen ist, dessen Längswände die radial gegenüber der Inklinationsachse ausgerichtete, mit der Gegenverzahnung des Schwenkarms zusammenwirkende Rastverzahnung bilden, und dass der Scharnierlappen mit einem Schwenkspiel bezüglich der Inklinationsachse zwischen den Schenkeln der Gelenkgabel eingreift.

Da zufolge dieser Maßnahme nicht der mittlere Scharnierlappen mit der Scharnierachse, sondern lediglich die Scharnierachse gegenüber dem mittleren Scharnierlappen verschwenkt wird, bleibt der für die Neigungseinstellung des Brillenbügels erforderliche Konstruktionsaufwand bescheiden, weil ja lediglich der mittlere Scharnierlappen zur Aufnahme des Schwenkarms für die Scharnierachse mit einem Langloch zu versehen ist, das den Scharnierlappen in Richtung der Scharnierachse durchsetzt. Der im Langloch des Scharnierlappens geführte Schwenkarm kann nur in Richtung der Scharnierachse aus dem Langloch austreten. Da die Gelenkgabel des Scharniergelenks den mittleren Scharnierlappen jedoch beidseitig übergreift, kann der die Scharnierachse tragende Schwenkarm in der Gebrauchsstellung des Scharniergelenks auch nicht in Richtung der Scharnierachse aus dem Langloch des Scharnierlappens austreten. Wird demnach eine radial gegenüber der geometrischen Inklinationsachse ausgerichtete Rastverzahnung für den eine Gegenverzahnung bildenden Schwenkarm vorgesehen, so bedarf es keiner körperlichen Inklinationsachse, um den Schwenkarm und damit die Scharnierachse gegenüber dem Scharnierlappen um die geometrische Inklinationsachse zu verschwenken. Es ist bloß für ein entsprechendes Schwenkspiel zwischen dem Scharnierlappen und den Schenkeln der Gelenkgabel zu sorgen. Dies bedeutet, dass ein erfindungsgemäßes Scharniergelenk nicht nur eine einfache Bauart aufweist, sondern auch eine Baugröße erlaubt, die mit Scharniergelenken für Brillen ohne Inklinationsachse durchaus vergleichbar ist.

Besonders einfache Konstruktionsbedingungen ergeben sich, wenn die Inklinationsachse im Bereich der Scharnierachse verläuft, weil sich in diesem Fall die Verlagerung der Scharnierachse gegenüber dem Scharnierlappen auf eine Schwenkverstellung um die Inklinationsachse beschränkt.

### Kurze Beschreibung der Zeichnung

In der Zeichnung ist der Erfindungsgegenstand beispielsweise dargestellt. Es zeigen
- Fig. 1: ein erfindungsgemäßes Scharniergelenk zwischen einem Brillengestell und einem Brillenbügel in einer zum Teil aufgerissenen Seitenansicht auf die Innenseite des Brillenbügels und
- Fig. 2: einen Schnitt durch den mittleren Scharnierlappen des Scharniergelenks nach der Linie II-II der Fig. 1 in einem größeren Maßstab.

### Weg zur Ausführung der Erfindung

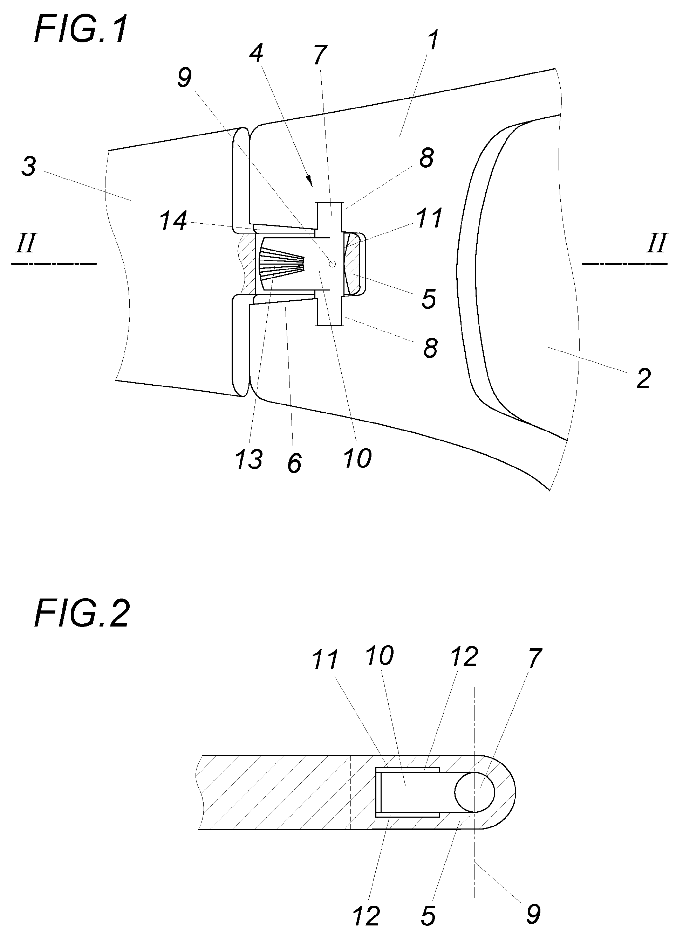

Die in der Fig. 1 ausschnittsweise dargestellte Brille weist ein Brillengestell 1 zur Aufnahme von Brillengläsern 2 sowie zwei Bügel 3 auf, die über ein Scharniergelenk 4 mit dem Brillengestell 1 verbunden sind. Dieses Scharniergelenk 4 umfasst einen mittleren Scharnierlappen 5 und eine diesen Scharnierlappen 5 beidseitig umgreifende Gelenkgabel 6, die mit dem Scharnierlappen 5 über eine Scharnierachse 7 gelenkig verbunden ist. Die Scharnierachse 7 wird gemäß dem dargestellten Ausführungsbeispiel in umfangsseitig offenen Lagerausnehmungen 8 der Gelenkgabel 6 gehalten, wobei die über den mittleren Scharnierlappen 5 beidseitig vorstehenden Stummel der Scharnierachse 7 in radialer Richtung schnappverschlussartig in die Lagerausnehmungen 8 eingedrückt werden, was jedoch nicht zwingend ist.

Zum Unterschied zu herkömmlichen Scharniergelenken ist die Scharnierachse 7 des Scharniergelenks 4 gegenüber dem Scharnierlappen 5 um eine senkrecht zur Scharnierachse 7 verlaufende Inklinationsachse 9 schwenkverstellbar gelagert. Zu diesem Zweck wird die Scharnierachse 7 von einem Schwenkarm 10 getragen, der in ein Langloch 11 des Scharnierlappens 5 eingesetzt ist. Dieses Langloch 11 durchsetzt den Scharnierlappen 5 in Richtung der Scharnierachse 7, wobei der Schwenkarm 10 innerhalb des Langlochs 11 um die geometrische Inklinationsachse 9 verschwenkt werden kann, die durch eine gegenüber der Inklinationsachse 9 radial ausgerichtete Rastverzahnung 12 auf den Längswänden des Langlochs 11 bestimmt wird. Die Rastverzahnung 12 wirkt mit einer entsprechenden Gegenverzahnung 13 auf den Seitenwänden des Schwenkarms 10 zusammen, sodass der Schwenkarm 10 gegenüber dem Scharnierlappen 5 um Winkelschritte entsprechend der Teilung der Rastverzahnung 12 verschwenkt werden kann. Zur Neigungseinstellung des Brillenbügels 3 gegenüber dem Brillengestell 1 ist demnach lediglich der Brillenbügel 3 gegenüber dem Gestell 1 unter einer Überwindung des Rastwiderstands der Rastverzahnung 12 zu verschwenken. Damit diese Schwenkverstellung nicht durch die Scharniergabel 6 behindert wird, ist zwischen dem Scharnierlappen 5 und den Schenkeln der Scharniergabel 6 ein entsprechendes Schwenkspiel 14 vorzusehen.

## Patentansprüche

1. Scharniergelenk (4) für eine Brille mit einem zwischen zwei Schenkeln einer Gelenkgabel (6) eingreifenden Scharnierlappen (5) und einer auf einem Schwenkarm (10) angeordneten Scharnierachse (7) zwischen dem Scharnierlappen (5) und der Gelenkgabel (6), wobei der Schwenkarm (10) um eine zur Scharnierachse (7) senkrechte Inklinationsachse (9) verschwenkbar und in der jeweiligen Schwenkstellung über eine Rastverzahnung (12) festhaltbar ist, die mit einer Gegenverzahnung (13) des Schwenkarms (10) zusammenwirkt, **dadurch gekennzeichnet, dass** der Schwenkarm (10) in einem den Scharnierlappen (5) in Richtung der Scharnierachse (7) durchsetzenden Langloch (11) vorgesehen ist, dessen Längswände die radial gegenüber der Inklinationsachse (9) ausgerichtete, mit der Gegenverzahnung (13) des Schwenkarms (10) zusammenwirkende Rastverzahnung (12) bilden, und dass der Scharnierlappen (5) mit einem Schwenkspiel (14) bezüglich der Inklinationsachse (9) zwischen den Schenkeln der Gelenkgabel (6) eingreift.

2. Scharniergelenk (4) nach Anspruch 1, **dadurch gekennzeichnet, dass** die Inklinationsachse (9) im Bereich der Scharnierachse (7) verläuft.

## Claims

1. Hinge joint (4) for eyeglasses, comprising a hinge tab (5) which engages between two limbs of a joint fork (6), and a hinge pin (7), arranged on a pivot arm (10), between the hinge tab (5) and the joint fork (6), wherein the pivot arm (10) can be pivoted about an inclination axis (9) perpendicular to the hinge pin (7) and can be retained in the respective pivot position by means of a latching toothing (12) which interacts with a counter-toothing (13) of the pivot arm (10), **characterised in that** the pivot arm (10) is provided in an elongated hole (11) which passes through the hinge tab (5) in the direction of the hinge pin (7), the longitudinal walls of said elongated hole forming the latching toothing (12) which is oriented radially with respect to the inclination axis (9) and interacts with the counter-toothing (13) of the pivot arm (10), and **in that** the hinge tab (5) engages between the limbs of the joint fork (6) with pivot play (14) relative to the inclination axis (9).

2. Hinge joint (4) as claimed in claim 1, **characterised in that** the inclination axis (9) extends in the region of the hinge pin (7).

## Revendications

1. Articulation à charnière (4) pour des lunettes, avec une patte de charnière (5), venant en prise entre deux branches d'une fourche d'articulation (6), et un axe de charnière (7) disposé sur un bras basculant (10) entre la patte de charnière (5) et la fourche d'articulation (6), le bras basculant (10) pouvant tourner autour d'un axe d'inclinaison (9) perpendiculaire à l'axe de charnière (7) et être fixé dans chaque position de pivotement par l'intermédiaire d'une denture à cliquet (12), qui coopère avec une denture antagoniste (13) du bras basculant (10), **caractérisée en ce que** le bras basculant (10) est prévu dans un trou oblong (11) traversant la patte de charnière (5) dans la direction de l'axe de charnière (7), dont les parois longitudinales forment la denture à cliquet (12) coopérant avec la denture antagoniste (13) du bras basculant (10), dirigée radialement par rapport à l'axe d'inclinaison (9), et **en ce que** la patte de charnière (5) vient en prise entre les branches de la fourche d'articulation (6) avec un jeu de pivotement (14) par rapport à l'axe d'inclinaison (9).

2. Articulation à charnière (4) selon la revendication 1, **caractérisée en ce que** l'axe d'inclinaison (9) est dans la zone de l'axe de charnière (7).
